# EUROPEAN PATENT APPLICATION

(11) **EP 4 678 460 A1**
(43) Date of publication of application: **14.01.2026**
(21) Application number: 24766239.8
(22) Date of filing: 02.02.2024
(51) Int. Cl.: B60L 13/04, B61F 1/08, B61B 13/08

(54) **NARROW VEHICLE BODY HIGH-SPEED MAGLEV TRAIN AND SUSPENSION FRAME THEREFOR**

(30) Priority: 07.03.2023 CN 202310215056; 06.06.2023 CN 202310666407
(71) Applicant: CRRC Qingdao Sifang Co., Ltd., Qingdao, Shandong 266111 (CN)
(72) Inventor: DING, Sansan, Qingdao, Shandong 266111 (CN); FU, Shanqiang, Qingdao, Shandong 266111 (CN); WU, Donghua, Qingdao, Shandong 266111 (CN); YU, Dalian, Qingdao, Shandong 266111 (CN); GU, Chenliang, Qingdao, Shandong 266111 (CN); YANG, Honghui, Qingdao, Shandong 266111 (CN); ZHAI, Chaozhi, Qingdao, Shandong 266111 (CN)
(74) Representative: Prinz & Partner mbB
(86) International application number: PCT/CN2024/075416
(87) International publication number: WO 2024/183517

(57) **Abstract**

A suspension frame, comprising a secondary suspension device (B), a cross-beam frame assembly (A) and an electromagnet module (C), wherein the cross-beam frame assembly comprises two cross-beam frames (1), which are transversely arranged for transverse carrying; guide electromagnet box bodes (7) on two sides of the electromagnet module are respectively positioned at two side ends of the two cross-beam frames, and each guide electromagnet box body is fixed to two cross-beam frames on corresponding sides for longitudinal carrying; and the secondary suspension device is arranged on the two cross-beam frames, so as to be connected to a vehicle body. Further provided is a narrow vehicle body high-speed maglev train with a suspension frame. By means of optimizing the structure of the suspension frame, it is not required to arranged longitudinal beams, such that the available space of the apparatus under a vehicle is greatly increased, and thus the mounting difficulty of the apparatus under the vehicle is effectively reduced.

## Description

The present application claims priorities to following Chinese Patent Applications, both of which are incorporated herein by reference in there entireties:
1) Chinese Patent Application No. CN202310215056.8, titled "NARROW VEHICLE BODY HIGH-SPEED MAGLEV TRAIN AND SUSPENSION FRAME THEREFOR", filed with the China National Intellectual Property Administration on March 7, 2023;
2) Chinese Patent Application No. CN202310666407.7, titled "MAGLEV TRAIN AND SUSPENSION FRAME THEREFOR", filed with the China National Intellectual Property Administration on June 6, 2023.

### FIELD

The present application relates to the technical field of maglev trains, in particular to a narrow body high-speed maglev train and a suspension frame thereof.

### BACKGROUND

With the rapid development of rail transit, high-speed trains, ordinary trains and intercity trains have come to a considerable scale. At present, rail transit galleries have become rare resources, the space left for the development of high-speed maglev trains on the ground is rare, and the land cost is greatly increased at the same time. Based on this, all or part of the high-speed maglev trains adopts underground channels (tunnels) passing through a mountain area with a sparse population, and then enters an urban center or a transportation hub through the underground tunnels, so as to maximize the advantage of short travel time, which is a trend of the development of high-speed maglev trains in the future. In other words, the narrow vehicle body high-speed maglev train is the focus of research and development for those skilled in the industry.

A suspension frame of an existing maglev train generally includes two cross-beams, a longitudinal beam, support arms and suspension electromagnets, and the two cross-beams are symmetrically arranged at two ends of the longitudinal beam respectively, the support arms are provided at two ends of each cross-beam respectively, two ends of each suspension electromagnet are respectively connected to inner sides of two adjacent support arms, and only guide force can be transmitted to realize the suspension and guidance of the carriage. The longitudinal beam is substantially located in the middle of the suspension frame and is mainly used to transfer longitudinal force. However, the longitudinal beam occupies the space for under-vehicle apparatus, resulting in an increasing installation difficulty for the under-vehicle apparatus.

### SUMMARY

The present application discloses a narrow vehicle body high-speed maglev train and a suspension frame thereof, and the pre-assembly of the suspension frame can be realized by structural optimization, which can effectively simplify the overall assembly process and reduce the process cost.

The suspension frame according to the present application includes a two-stage suspension device, a cross-beam frame assembly and an electromagnet module. The cross-beam frame assembly includes two cross-beam frames which are arranged transversely for a transverse bearing. Guide electromagnet box bodies on two sides of the electromagnet module are positioned at two ends of the two cross-beam frames respectively, and each guide electromagnet box body is fixed to the two cross-beam frames on corresponding sides for a longitudinal bearing. The two-stage suspension device is arranged on the two cross-beam frames for being connected to a vehicle body.

Optionally, the two-stage suspension device includes an air spring and an additional air chamber which are arranged at a top of each end of each cross-beam frame, and the additional air chamber is arranged between a bottom of the corresponding air spring and the top of the cross-beam frame to provide a gas medium to the air spring.

Optionally, a body of the cross-beam frame is provided with an air spring mounting bracket, and the air spring and the additional air chamber are sequentially fixed on the corresponding air spring mounting bracket.

Optionally, the body of one of the two cross-beam frames is provided with transverse auxiliary springs, and the body of the other cross-beam frame is provided with transverse blockers. An extension end of each transverse auxiliary spring is provided opposite to the corresponding additional air chamber and elastically abuts against the corresponding additional air chamber. An extension end of each transverse blocker is provided opposite to the corresponding additional air chamber and spaced apart from the corresponding additional air chamber by a first predetermined gap.

Optionally, the body of one of the two cross-beam frames is provided with two transverse auxiliary spring brackets, and the body of the other cross-beam frame is provided with two transverse blocker brackets. Each of the two transverse auxiliary springs is fixedly provided on one side of the corresponding transverse auxiliary spring bracket, and each of the two transverse blockers is fixedly provided on one side of the corresponding transverse blocker bracket. A wear plate is arranged on each of opposite side surfaces of the additional air chambers matched with the transverse auxiliary springs and the transverse blockers.

Optionally, one of the two cross-beam frames is provided with an anti-side-rolling torsion bar, which is provided on the other side of the transverse auxiliary spring bracket. A bottom rod of the anti-side-rolling torsion bar is longitudinally arranged and extended to form a limiting end.

Optionally, a vertical limiting spring is further provided on the cross-beam frame where the anti-side-rolling torsion bar is located, and the vertical limiting spring is provided on the other side of the transverse auxiliary spring bracket. The vertical limiting spring is located above the limiting end of the anti-side-rolling torsion bar and spaced apart from the limiting end by a second predetermined gap.

Optionally, a hinge seat is provided at a bottom of the body of the cross-beam frame, the bottom rod of the anti-side-rolling torsion bar is hinged to the hinge seat. The vertical limiting spring is fixed to the corresponding transverse auxiliary spring bracket.

Optionally, the suspension frame includes two groups of height adjustment valves, and the two groups of height adjustment valves are arranged on the cross-beam frame and spaced apart in a transverse direction.

Optionally, the suspension frame further includes a traction device, a support skid and a rescue wheel device. The traction device is provided on the cross-beam frame, the support skid and the rescue wheel device are provided at the bottom of the cross-beam frame, and the rescue wheel device is located on an inner side of the support skid.

For a narrow vehicle body high-speed maglev train, a solution of a pre-assembled suspension frame is inventively proposed according to the present application. Specifically, the cross-beam frame assembly includes two cross-beam frames which are arranged transversely for transverse bearing. Guide electromagnet box bodies on two sides of the electromagnet module are positioned at two ends of the two cross-beam frames respectively, and each guide electromagnet box body is fixed to the two cross-beam frames on corresponding sides for longitudinal bearing. The two-stage suspension device is arranged on the two cross-beam frames and configured to be connected to a vehicle body. As a whole, the suspension frame may form a pre-assembled structure based on the cross-beam frame assembly. In this way, the pre-assembled suspension frame can be dropped and assembled with the vehicle body, and compared with the drop-off assembly solution of the whole vehicle, the present solution has good assembly manufacturability. In addition, in this solution, the guide electromagnet box body serves as a bearing part of the suspension frame, and it not only transmits a longitudinal traction/braking load of the vehicle, but also has a relatively high nodding rigidity and bending rigidity as well as a relatively low torsional rigidity, which can ensure the vehicle to operate stably and pass through the curve smoothly. Compared with a conventional solution, the original longitudinal beam structure in the conventional solution is omitted, so that the space occupied by the longitudinal beam can be used for the installation and configuration of the under-vehicle apparatus.

In the optional solution of the present application, the two-stage suspension device utilizes the transverse displacement of the capsule air spring with low rigidity to replace the original swing rod mechanism, and the swing rod suspension and the swing bolster lever mechanism in the two-stage suspension of the existing suspension frame are omitted, so that the structure of the secondary suspension is simplified. Based on the arrangement of the air spring, in this solution, the gas medium is supplied to the air spring through the additional air chamber, so that members such as a swing bolster arm, a swing bolster seat, a Z-direction support, a swing rod assembly and an upper limiting spring and a lower limiting spring in the existing suspension frame are omitted, thereby greatly reducing the number of parts. In this way, the self-weight of the suspension frame can be effectively reduced on the basis of comfort improvement.

In another optional solution of the present application, the body of one of the two cross-beam frames is provided with two transverse auxiliary springs, and the body of the other cross-beam frame is provided with two transverse blockers. An extension end of each of the transverse auxiliary springs is arranged opposite to the corresponding additional air chamber and elastically abuts against the corresponding additional air chamber. An extension end of each of the transverse blockers is arranged opposite to the corresponding additional air chamber and spaced apart from the corresponding additional air chamber by a first predetermined gap. For example and without limitation, wear plates are respectively arranged on opposite side surfaces of the additional air chambers matched with the transverse auxiliary springs and the transverse blockers. That is to say, the transverse auxiliary spring is elastically contacted with the wear plate mounted on the air spring additional air chamber, and there is a free gap between the transverse blocker and the wear plate mounted on the air spring additional air chamber. In this way, when the vehicle passes through the curve, the vehicle body is displaced transversely relative to the suspension frame, the cross-beam frame provided with the transverse auxiliary spring generates the spring counterforce. Under the action of the counterforce torque, the cross-beam frame provided with the transverse blocker is pushed to generate reverse swing heads respectively, so that the suspension frame tends to move radially, and then passes through the curve smoothly.

Regarding the structure for installing the guide electromagnet, further optionally, two guide electromagnets are arranged in parallel between a first support arm and a second support arm. Two ends of each guide electromagnet are respectively provided with a fixed-end connection seat and an elastic-end connection seat, and the fixed-end connection seat is connected to the first support arm by means of a connection bolt, and the elastic-end connection seat is connected to the second support arm by means of an elastic pull rod.

Preferably, a shear-resistant assembly is provided between the fixed-end connection seat and the first support arm for preventing the connection bolt from being sheared.

Preferably, the shear-resistant assembly includes an inner baffle, an outer baffle, a positioning block, an elastic pad and a limiting pin,
the inner baffle is fixedly connected to the first support arm;
the outer baffle is fixedly connected to the fixed-end connection seat;
the positioning block is embedded in a positioning groove formed in the fixed-end connection seat;
the elastic pad is directly sandwiched between the positioning block and the outer baffle;
the limiting pin is inserted between the inner baffle and the positioning block in the longitudinal direction and configured for limiting the fixed-end connection seat to move relative to the first support arm in the transverse direction or the vertical direction.

Preferably, the shear-resistant assembly further includes an adjustment cushion block and two clamping cushion blocks,
the adjustment cushion block is provided between the positioning block and the positioning groove for adjusting the position of the positioning block relative to the positioning groove;
the two clamping cushion blocks are respectively provided on two opposite sides of the adjustment cushion block for clamping the adjustment cushion block in the transverse direction.

Preferably, the adjustment cushion block includes two vertical-adjustment cushion blocks and two transverse-adjustment cushion blocks,
the two vertical-adjustment cushion blocks are respectively provided on an upper side and a lower side of the positioning block and configured for adjusting the position of the positioning block in the vertical direction.
the two transverse-adjustment cushion blocks are respectively provided on a left side and a right side of the positioning block and configured for adjusting the position of the positioning block in the transverse direction.

Preferably, the elastic pull rod is provided with two node seats, the elastic-end connection seat and the second support arm are respectively connected to the two node seats by means of fixing bolts, and a shear-resistant sleeve is mounted outside the fixing bolt and abuts against the elastic-end connection seat or the second support arm.

Preferably, each of the guide electromagnets includes an upper back box and a lower back box which are provided opposite to each other, and reinforcing plates are provided at two ends of each of the upper back box and the lower back box respectively.

Preferably, each of the guide electromagnets further includes multiple groups of magnetic poles and magnetic yokes arranged on two opposite sides of each group of magnetic poles, and each group of magnetic poles are distributed linearly, and the magnetic pole is bolted to the magnetic yoke.

Preferably, a clamping groove is integrally formed at one end of the magnetic yoke close to the elastic-end connection seat, the clamping groove is matched with a clamping block provided on the transverse pull rod, and a positioning pin is inserted between the clamping groove and the clamping block.

Compared with the background art, the suspension frame of the maglev train according to the present application includes the first support arm, the second support arm and the two guide electromagnets, and the two guide electromagnets are arranged in parallel between the first support arm and the second support arm. Two ends of each guide electromagnet are respectively mounted with a fixed-end connection seat and an elastic-end connection seat, and the fixed-end connection seat is connected to the first support arm by means of a connection bolt, and the elastic-end connection seat is connected to the second support arm by means of an elastic pull rod, so that the two guide electromagnets can not only transmit a guide force and a longitudinal force, but also reduce the impact of the longitudinal force, so the adjacent suspension frames are torsionally decoupled relative to each other in the longitudinal direction. In this way, the guide electromagnet has the function of a longitudinal beam, thus replacing the longitudinal beam, so that the suspension frame can be free of the longitudinal beam, thereby the available space for the under-vehicle apparatus is greatly increased, and the installation difficulty of the under-vehicle apparatus is effectively reduced.

The present application further provides a narrow vehicle body high-speed maglev train, which includes the foregoing suspension frame.

### BRIEF DESCRIPTION OF THE DRAWINGS

FIG. 1 is a schematic view of an overall structure of a suspension frame according to a specific embodiment;
FIG. 2 is a view of FIG. 1 in D direction;
FIG. 3 is a top view of FIG. 1;
FIG. 4 is a cross- sectional view of FIG. 3 taken along a line E-E;
FIG. 5 is a structural view of a suspension frame of a maglev train according to a specific embodiment of the present application;
FIG. 6 is a structural view of a first support arm connected to a fixed-end connection seat in FIG. 5;
FIG. 7 is a structural view of a second support arm connected to an elastic-end connection seat in FIG. 5;
FIG. 8 is a cross-sectional view of the first support arm, the fixed-end connection seat and a shear-resistant assembly of FIG. 5 in an assembled state;
FIG. 9 is a structural view of the shear-resistant assembly in FIG. 5;
FIG. 10 is an exploded view of FIG. 9;
FIG. 11 is a cross-sectional view of the second support arm, the elastic-end connection seat and a fixing bolt of FIG. 5 in an assembled state;
FIG. 12 is a structural view of a guide electromagnet in FIG. 5;
FIG. 13 is another view of FIG. 12;
FIG. 14 is a structural view of the guide electromagnet connected to a transverse pull rod in FIG. 5;
FIG. 15 is a partial enlarged view of part A in FIG. 14.

Reference numerals in the accompanying drawings are explained as follows:

| | | | | | |
|---|---|---|---|---|---|
| A. | cross-beam frame assembly; | 1. | cross-beam frame; | 2. | hinge seat; |
| 3. | transverse auxiliary spring bracket; | 4. | transverse blocker bracket; | | |
| B. | two-stage suspension device; | 5. | air spring; | | |
| 6. | additional air chamber; | C. | electromagnet module; | | |
| 7. | guide electromagnet box body; | 8. | guide electromagnet; | | |
| 9. | suspension electromagnet; | 10. | transverse auxiliary spring; | | |
| 11. | transverse blocker; torsion bar; | 12. | wear plate; | 13. | anti-side-rolling |
| 131. | limiting end; adjustment valve; | 14. | vertical limiting spring; | 15. | height |
| 16. | traction device; mounting bracket; | 17. | support skid; | 18. | air spring |
| 19. | rescue wheel device; arm; | 111. | first support arm; | 112. | second support |
| 114. | fixed-end connection seat; | 115. | elastic-end connection seat; | | |
| 116. | connection bolt; assembly; | 117. | elastic pull rod; | 118. | shear-resistant |
| 119. | fixing bolt; rod; | 20. | shear-resistant sleeve; | 121. | transverse pull |
| 122. | positioning pin; box; | 136. | upper back box; | 132. | lower back |
| 133. | reinforcing plate; | 134. | magnetic pole; | 135. | magnetic yoke; |
| 1351. | clamping groove; | 171. | node seat; | 181. | inner baffle; |
| 182. | outer baffle; | 183. | positioning block; | 184. | elastic pad; |
| 185. | limiting pin; | 186. | adjustment cushion block; | | |
| 187. | clamping cushion block; | 1811. | fixing plate; | 1812. | fixing block; |
| 1861. | vertical-adjustment cushion block; | 1862. | transverse-adjustment | | |
| cushion | block; | | | | |
| 211. | clamping block. | | | | |

### DETAILED DESCRIPTION OF THE EMBODIMENTS

In order to enable those skilled in the art to better understand the technical solutions of the present application, the present application will be further described in detail below with reference to the accompanying drawings and specific embodiments.

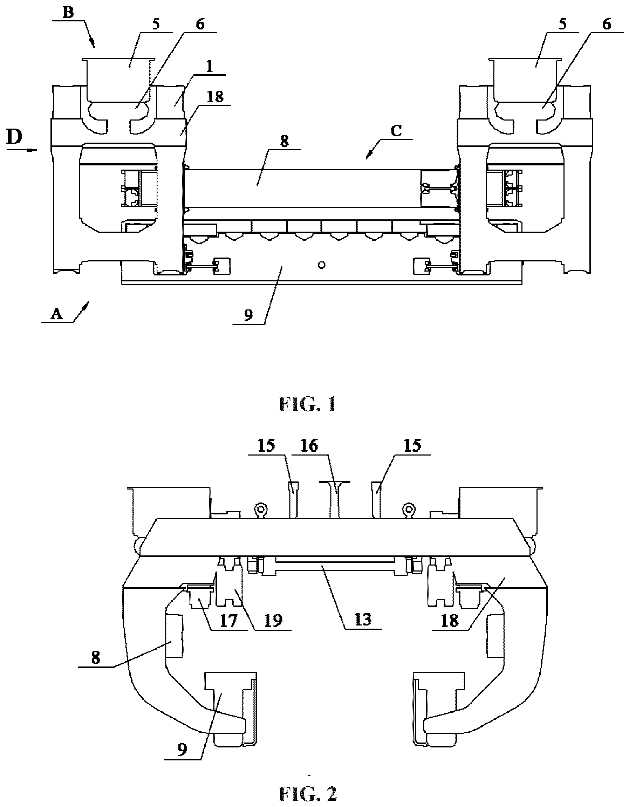

Referring to FIG. 1 and FIG. 2, FIG. 1 is a schematic view of an overall structure of a suspension frame in this embodiment, and FIG. 2 is a view of FIG. 1 in D direction. Generally, this embodiment is described based on the illustrated suspension frame, and it should be understood that, as an example, the specific configuration of the suspension frame and the dimensional proportional relationship between structures do not substantially limit the protection scope claimed by the present application.

As shown in the figures, a suspension frame includes a cross-beam frame assembly A, a two-stage suspension device B, and an electromagnet module C. The cross-beam frame assembly A serves as a base part of a pre-assembled structure, and the cross-beam frame assembly A includes two cross-beam frames 1, which are transversely arranged for a transverse bearing. Accordingly, guide electromagnet box bodies 7 on two sides of the electromagnet module C are positioned at two ends of the two cross-beam frames 1 respectively, and each guide electromagnet box body 7 is fixed to the two cross-beam frames 1 on a corresponding side for a longitudinal bearing.

As used herein, the orientation terms "transverse" and "longitudinal" are consistent with a transverse direction and a longitudinal direction of the vehicle body. In other words, the "transverse" and "longitudinal" herein are consistent with the transverse direction and longitudinal direction of the vehicle body respectively.

In this solution, the guide electromagnet box body 7 serves as a bearing part of the suspension frame. The guide electromagnet box body 7 not only transmits a longitudinal traction/braking load of the vehicle, but also has a relatively high nodding rigidity and bending rigidity as well as a relatively low torsional rigidity, which can ensure the vehicle to operate stably and pass through the curve smoothly.

Compared with a conventional solution, the guide electromagnet box body 7 performs the longitudinal bearing, and the original longitudinal beam structure in the conventional solution is accordingly omitted, so that the space occupied by the longitudinal beam can be used for the installation and configuration of under-vehicle apparatus. In a specific application, the fixed connection between two ends of the guide electromagnet box body 7 and the cross-beam frame 1 may be implemented in different manners, and may be specifically determined based on corresponding product design requirements.

The two-stage suspension device B is arranged on the two cross-beam frames 1 for being connected to the vehicle body, and the pre-assembled suspension frame may be integrated with the vehicle body. Compared with forming solution of the whole vehicle, this solution has better assembly manufacturability. It may be understood that specific functions of the guide electromagnet 8 and the suspension electromagnet 9 of the electromagnet module C can be realized by those skilled in the field based on the prior art, and are not the core conception of the present application, which thus will not be described in detail herein.

In this solution, the two-stage suspension device B includes an air spring 5 and an additional air chamber 6 which are arranged at a top of either end of each cross-beam frame 1, so the transverse displacement of the capsule air spring with low rigidity is used to replace the swing rod mechanism in the conventional solution. Referring to FIG. 1, FIG. 2 and FIG. 3, and FIG. 3 is a top view of FIG. 1.

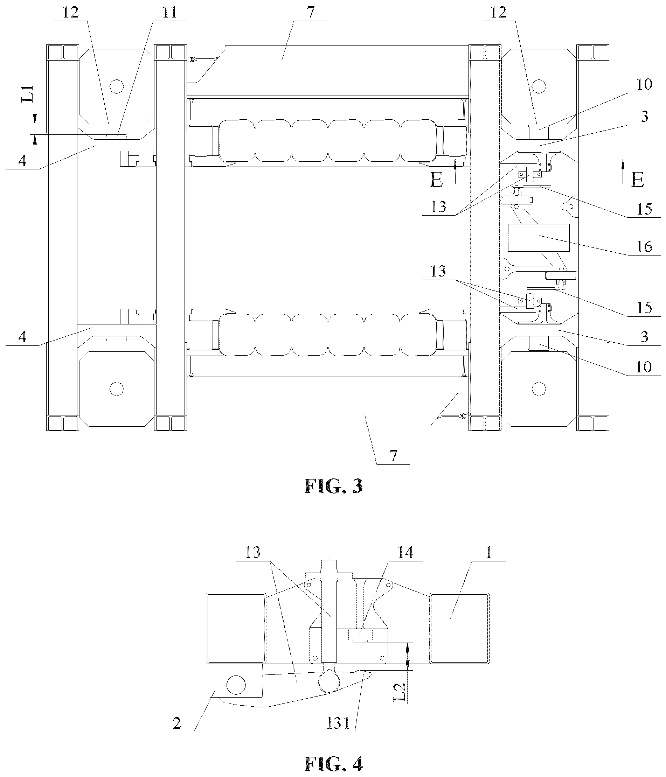

As shown in FIG. 2 and FIG. 3, the additional air chamber 6 is arranged between a bottom of the air spring 5 and the top of a corresponding cross-beam frame 1, so as to provide a gas medium to the air spring 5. According to this solution, the swing rod suspension and the swing bolster lever mechanism in the two-stage suspension of the existing suspension frame are omitted, so that the structure of the two-stage suspension is simplified. Based on the arrangement of the air spring 5, the gas medium is supplied to the air spring 5 through the additional air chamber 6, so that members such as a swing bolster arm, a swing bolster seat, a Z-direction support, a swing rod assembly and an upper limiting spring and a lower limiting spring in the existing suspension frame are omitted, thereby greatly reducing the number of parts. In this way, the self-weight of the suspension frame can be effectively reduced while comfort is improved.

The form of the body structure of the cross-beam frame 1 can be selected as required. It should be understood that the body structure of the cross-beam frame 1 which can give consideration to good bearing strength and reasonable self-weight control is a preferred choice. Specifically, a body of the cross-beam frame 1 is provided with an air spring mounting bracket 18, and the air spring 5 and the additional air chamber 6 are sequentially fixed on the corresponding air spring mounting bracket 18. As shown in FIG. 1, the additional air chamber 6 is embedded in the body of the cross-beam frame 1, and correspondingly, a portion of the air spring 5 is disposed in the body of the cross-beam frame 1, and the structure in the height direction is more compact.

As further shown in FIG. 3, in this solution, the cross-beam frame 1 on the right side in the figure is provided with two transverse auxiliary springs 10; and the cross-beam frame 1 on the left side in the figure is provided with two transverse blockers 11. An extension end of each of the two transverse auxiliary springs 10 is arranged opposite to the corresponding additional air chamber 6 and elastically abuts against the corresponding additional air chamber 6. An extension end of each transverse blocker 11 is arranged opposite to the corresponding additional air chamber 6 and spaced apart from the corresponding additional air chamber 6 by a first predetermined gap L1.

Certainly, in order to avoid excessive wear, a wear plate 12 may be provided on each of opposite side surfaces of the corresponding additional air chambers 6, so that the transverse auxiliary spring 10 is elastically contacted with the wear plate 12 mounted on the additional air chamber 6. Similarly, a free gap is present between the transverse blocker 11 and the wear plate 12 mounted on the corresponding additional air chamber 6, that is, the first predetermined gap L1. When the vehicle passes through the curve, the vehicle body is displaced transversely relative to the suspension frame, and the cross-beam frame provided with the transverse auxiliary spring generates the spring counterforce. Under the action of the counterforce torque, the cross-beam frame provided with the transverse blocker is pushed to generate reverse displacement respectively, so that the suspension frame tends to move radially, and then passes through the curve smoothly. The stability of the operation of the whole vehicle can be reasonably controlled.

In other specific applications, in comparison with the two cross-beam frames 1, the transverse auxiliary spring 10 and the transverse blocker 11 may also be arranged on the two cross-beam frames 1 along a left-right direction in reverse, but not limited to the configuration shown in the figure. That is to say, the body of one cross-beam frame 1 is provided with the transverse auxiliary spring 10, and the body of the other cross-beam frame 1 is provided with the transverse blocker 11, so that the above-mentioned good operation stability can be obtained.

Correspondingly, the body of one of the two cross-beam frames 1 is provided with two transverse auxiliary spring brackets 3, and the body of the other cross-beam frame is provided with two transverse blocker brackets 4.

As shown in the figure, the transverse auxiliary spring brackets 3 are arranged on the cross-beam frame 1 on the right side, and each of the transverse auxiliary springs 10 is fixedly arranged on one side of the corresponding transverse auxiliary spring bracket 3. The transverse blocker brackets 4 are arranged on the cross-beam frame 1 on the left side, and each of the transverse blockers 11 is fixedly arranged on one side of the corresponding transverse blocker bracket 4.

In addition, an anti-side-rolling torsion bar 13 and a vertical limiting spring 14 are arranged on the cross-beam frame 1 where the transverse auxiliary springs 10 are located. Referring to FIG. 3 and FIG. 4, FIG. 4 is a cross-sectional view of FIG. 3 taken along a line E-E.

In this solution, the anti-side-rolling torsion bar 13 and the vertical limiting spring 14 are arranged on the other side of the transverse auxiliary spring bracket 3. In other words, the additional air chamber 6 is located on an outer side of the transverse auxiliary spring bracket 3, and the anti-side-rolling torsion bar 13 and the vertical limiting spring 14 are located on an inner side of the transverse auxiliary spring bracket 3.

As shown in the figure, a bottom rod of the anti-side-rolling torsion bar 13 is longitudinally arranged and extended to form a limiting end 131, and the vertical limiting spring 14 is located above the limiting end 131 and spaced apart from the limiting end 131 by a second predetermined gap L2. In this way, when the vehicle body is displaced vertically upward relative to the suspension frame, the bottom rod arm of the anti-side-rolling torsion bar 13 comes into contact with the vertical limiting spring 14 at a limit position, which plays a role of vertically upward limit. When the vehicle body is displaced vertically downward relative to the suspension frame, the air spring 5 can in charge of vertically downward limit.

Specifically, as shown in FIG. 4, a hinge seat 2 is provided at a bottom of the body of the cross-beam frame 1, and the bottom rod of the anti-side-rolling torsion bar 13 is hinged to the hinge seat 2. The vertical limiting spring 14 is fixed to the corresponding transverse auxiliary spring bracket 3. In other specific applications, the assembly mode of the anti-side-rolling torsion bar 13 and the vertical limiting spring 14 may also be specifically selected based on actual product design and available space. It should be understood that, as long as the above functional requirements can be met, it is within the protection scope of the present application.

In addition, the suspension frame provided in this solution further includes two groups of height adjustment valves 15, and the two groups of height adjustment valves are arranged on the cross-beam frame 1 and spaced apart in a transverse direction as shown in FIG. 2 and FIG. 3. In this way, two groups of height adjustment valves 15 are additionally arranged at two ends of the vehicle, which can effectively avoid the problem of deviation between the air springs on left and right side of the same air path in an air spring air supply system caused by unbalanced load of the vehicle body.

In addition, the suspension frame provided in this solution further includes a traction device 16, a support skid 17 and a rescue wheel device 19. As shown in FIG. 3, the traction device 16 is provided on the cross-beam frame 1, and the support skid 17 and the rescue wheel device 19 are provided at the bottom of the cross-beam frame 1.

The rescue wheel device 19 solves the difficult problem of vehicle rescue, and it can effectively improve the rescue efficiency. As shown in the figure, the rescue wheel device 19 is located on an inner side of the support skid 17, that is, it is mounted on one side of the support skid 17 near the longitudinal center line of the vehicle, and each suspension frame is provided with four groups of rescue traveling wheels. Certainly, the traveling wheels are only activated when the vehicle is waiting for rescue. When a single vehicle or multiple vehicles cannot be suspended, the rescue wheel device 19 can be manually or automatically lowered to support the whole vehicle, the skid is lifted and leaves the rail, and the vehicle is towed back to a maintenance garage through the traction of an adjacent vehicle (normal vehicle) or a rescue vehicle (for fault rescue of the whole train).

In the design of the traveling wheel mechanism, it is necessary to consider various boundary conditions such as rescue speed, rail plate joint, transverse and longitudinal slopes, and curve, etc., and the vertical vibration amplitude generated in the rescue process cannot cause the suspension electromagnet and the skid to contact the rail. The traveling wheel may use hydraulic pressure as the working power, and a suitable hydraulic cylinder is selected to drive the traveling wheel. The traveling wheel is normally in a retracted state, and at this time, an actuator piston rod is pushed out; and when the actuator piston rod is retracted, the traveling wheel falls and supports the suspension frame so as to lift the entire vehicle, and the skid leaves the rail surface.

In addition to the foregoing suspension frame, a narrow vehicle body high-speed maglev train is further provided in this embodiment, and the high-speed maglev train includes the foregoing suspension frame. In this way, the narrow vehicle body high-speed maglev train can be widely applied to a high-speed maglev traveling system with whole-line pipe (tunnel) operation; or it can also be used for a high-speed maglev traveling system with partial pipe (tunnel) operation, partial open-line operation, or all open-line operation. It should be understood that other functions of the narrow vehicle body high-speed maglev train can be realized by those skilled in the field based on the prior, and are not the core conception of the present application, and thus will not be described in detail herein.

It should be noted that, in the above embodiments of the present application, the structural forms of the air spring 5, the additional air chamber 6, the transverse auxiliary spring 10, the transverse blocker 11, the vertical limiting spring 14, the height adjustment valve 15, the traction device 16, the support skid 17 and the like may be selected based on the requirements of the specific product design.

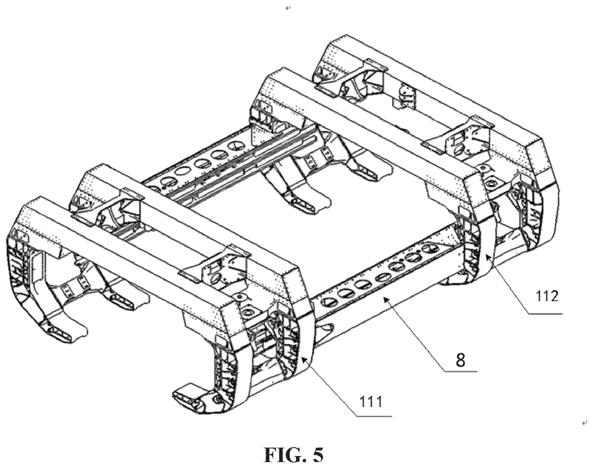

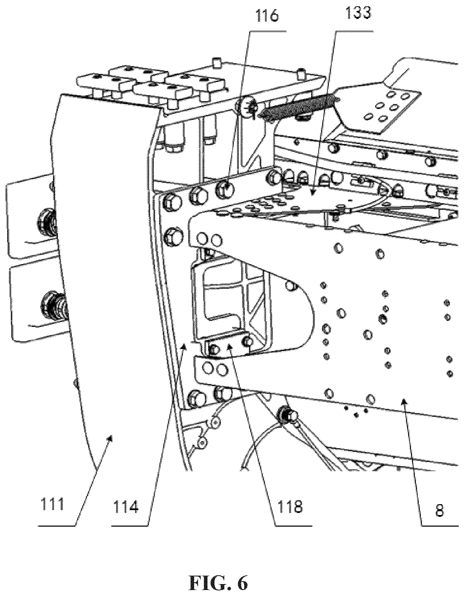

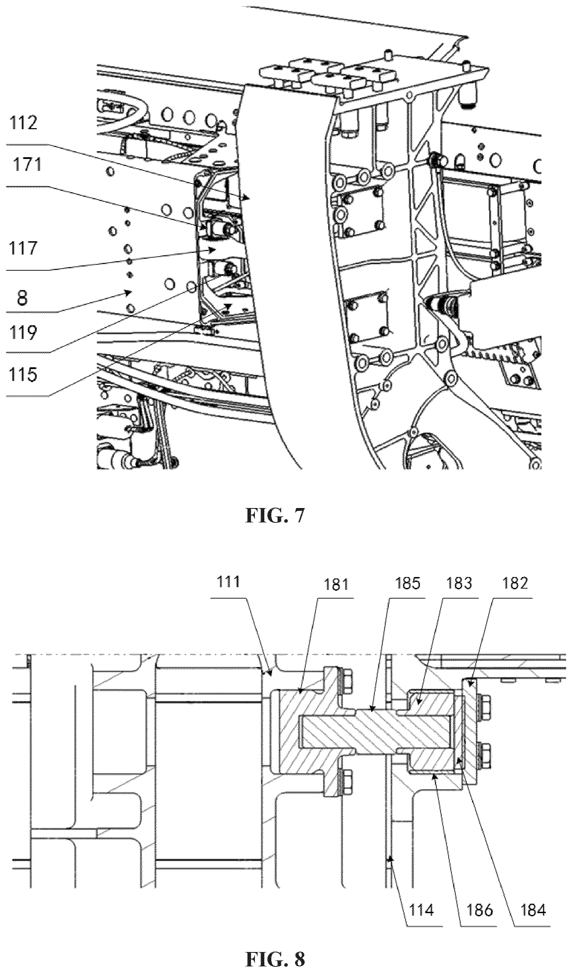

Referring to FIG. 5 to FIG. 7, FIG. 5 is a structural view of a suspension frame of a maglev train according to a specific embodiment of the present application; FIG. 6 is a structural view of a first support arm connected to a fixed-end connection seat in FIG. 5; and FIG. 7 is a structural view of a second support arm connected to the elastic-end connection seat in FIG. 1.

First, it should be noted that the longitudinal direction herein refers to the length direction of the suspension frame, the transverse direction refers to the width direction of the suspension frame, and the vertical direction refers to the height direction of the suspension frame.

A suspension frame of a maglev train is disclosed in an embodiment of the present application, and the suspension frame includes a first support arm 111, a second support arm 112 and two guide electromagnets 8. The first support arm 111 and the second support arm 112 are respectively arranged on two parallel cross-beams, and an inner side of the first support arm 111 and an inner side of the second support arm 112 are both connected to the guide electromagnet 8. The structure and connection relationship of the first support arm 111 and the second support arm 112 may refer to the prior art. The two guide electromagnets 8 are arranged in parallel between the first support arm 111 and the second support arm 112, and the two guide electromagnets 8 have the same structure and installation manner.

Two ends of each guide electromagnet 8 are respectively provided with a fixed-end connection seat 114 and an elastic-end connection seat 115. The fixed-end connection seat 114 is connected to the first support arm 111 by means of a connection bolt 116. The fixed-end connection seat 114 includes a connection plate and a connection sleeve which are integrally connected to each other, and the connection plate is connected to the first support arm 111 by means of the connection bolt 116, and a fixed end of the guide electromagnet 8 is inserted in the connection sleeve, which is connected to the fixed end of the guide electromagnet 8 by riveting. The elastic-end connection seat 115 is connected to the second support arm 112 by means of an elastic pull rod 117. The elastic pull rod 117 is made of an elastic material, which can extend and retract in the longitudinal direction of the suspension frame, so that the impact of longitudinal force can be reduced.

In conclusion, in the present application, by optimizing the structure of the suspension frame, the two guide electromagnets 8 can not only transmit a guide force and a longitudinal force, but also reduce the impact of the longitudinal force, so the adjacent suspension frames are torsionally decoupled relative to each other in the longitudinal direction. In this way, the guide electromagnet 8 has the function of a longitudinal beam, thus replacing the longitudinal beam, so that the suspension frame can have no longitudinal beam, the available space for the under-vehicle apparatus is greatly increased, and the installation difficulty of the under-vehicle apparatus is effectively reduced.

In addition, omitting the longitudinal beam can effectively reduce the number of components of the suspension frame, the weight of the suspension frame is reduced, which facilitates the realization of light weight and reducing the manufacturing cost.

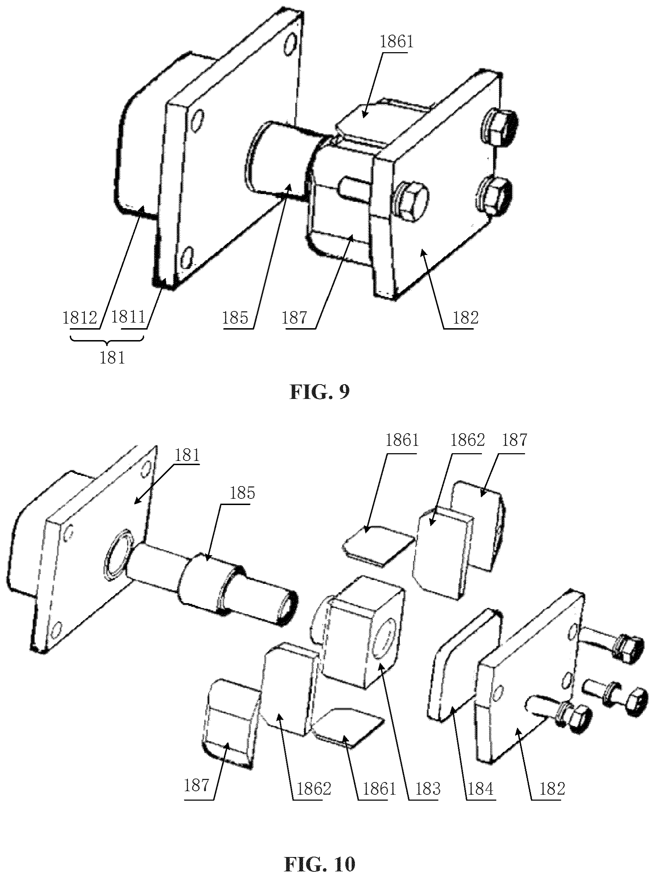

Referring to FIG. 8 to FIG. 10, FIG. 8 is a cross-sectional view of the first support arm, the fixed-end connection seat and a shear-resistant assembly of FIG. 5 in an assembled state; FIG. 9 is a structural view of the shear-resistant assembly in FIG. 5; and FIG. 10 is an exploded view of FIG. 9.

A shear-resistant assembly 118 is disposed between the fixed-end connection seat 114 and the first support arm 111, so as to limit relative movement of the fixed-end connection seat 114 relative to the first support arm 111 in the transverse direction and the vertical direction, prevent the connection bolt 116 from being sheared, reduce the risk of breakage of the connection bolt 116, and thus improve reliability.

The shear-resistant assembly 118 includes an inner baffle 181, an outer baffle 182, a positioning block 183, an elastic pad 184 and a limiting pin 185, and the inner baffle 181 is fixedly connected to the first support arm 111. The inner baffle 181 includes a fixing plate 1811 and a fixing block 1812 which are integrally connected to each other, the first support arm 111 correspondingly has a fixing groove, the fixing block 1812 is in concave-convex fit with the fixing groove, and the fixing plate 1811 is fixed to the first support arm 111 by bolts. The outer baffle 182 is fixed to the fixed-end connection seat 114 by bolts. The fixed-end connection seat 114 close to the inner baffle 181 has a positioning groove, and the positioning block 183 is embedded in the positioning groove for limiting the installation position of the limiting pin 185. The elastic pad 184 is directly sandwiched between the positioning block 183 and the outer baffle 182 for absorbing the vibration impact between the limiting pin 185 and the fixed-end connection seat 114 in the longitudinal direction. The elastic pad 184 may be specifically a rubber pad, but is not limited thereto. The limiting pin 185 is a stepped shaft with a large-diameter middle and two small-diameter ends. The limiting pin 185 is inserted between the inner baffle 181 and the positioning block 183 in the longitudinal direction, and shaft-hole fit is adopted between the limiting pin 185 and the inner baffle 181 and between the limiting pin 185 and the positioning block 183, thus the fixed-end connection seat 114 to move relative to the first support arm 111 in the transverse direction or the vertical direction is limited.

The shear-resistant assembly 118 further includes an adjustment cushion block 186 and two clamping cushion blocks 187, and the adjustment cushion block 186 is arranged between the positioning block 183 and the positioning groove for adjusting the position of the positioning block 183 relative to the positioning groove, so as to adjust the installation state of the limiting pin 185. The two clamping cushion blocks 187 are respectively arranged on two opposite sides of the adjustment cushion block 186 for clamping the adjustment cushion block 186 in the transverse direction.

The adjustment cushion block 186 includes two vertical-adjustment cushion blocks 1861 and two transverse-adjustment cushion blocks 1862, and the two vertical-adjustment cushion blocks 1861 are respectively arranged on an upper side and a lower side of the positioning block 183 for adjusting the position of the positioning block 183 in the vertical direction. The two transverse-adjustment cushion blocks 1862 are respectively arranged on a left side and a right side of the positioning block 183 for adjusting the position of the positioning block 183 in the transverse direction. Certainly, the structures of the shear-resistant assembly 118 and the adjustment cushion block 186 are not limited thereto.

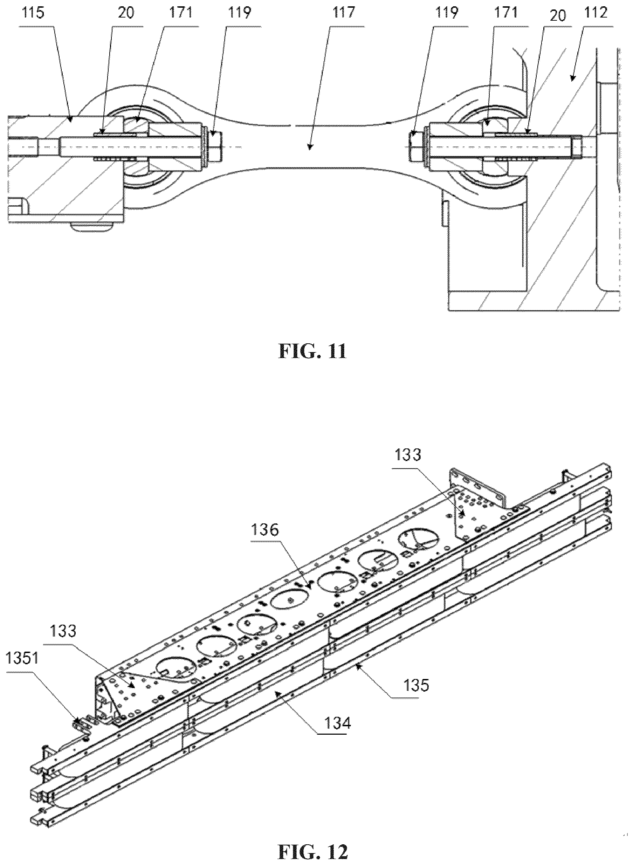

Referring to FIG. 11, FIG. 11 is a cross-sectional view of the second support arm, the elastic-end connection seat and the fixing bolt of FIG. 5 in an assembled state.

A node seat 171 is provided at each of two ends of the elastic pull rod 117 respectively, the node seat 171 extends through a through hole at the end of the elastic pull rod 117, and a fixing bolt 119 is mounted at either end of each node seat 171. One of the node seats 171 is fixedly connected to the elastic-end connection seat 115 by two fixing bolts 119, and the other node seat 171 is fixedly connected to the second support arm 112 by two fixing bolts 119, so that the elastic pull rod 117 is fixed between the elastic-end connection seat 115 and the second support arm 112.

A mounting groove is formed in each of opposite surfaces of the elastic-end connection seat 115 and the second support arm 112 respectively, and the fixing bolt 119 is mounted in the mounting groove and is in threaded fit with the mounting groove. A stepped groove is formed at an opening of the mounting groove, a shear-resistant sleeve 20 is mounted outside the fixing bolt 119, and the shear-resistant sleeve 20 is inserted into the stepped groove, so that an outer side surface of the shear-resistant sleeve 20 abuts against the elastic-end connection seat 115 or the second support arm 112 respectively, thereby preventing the fixing bolt 119 from being sheared, which is beneficial to further improving the reliability.

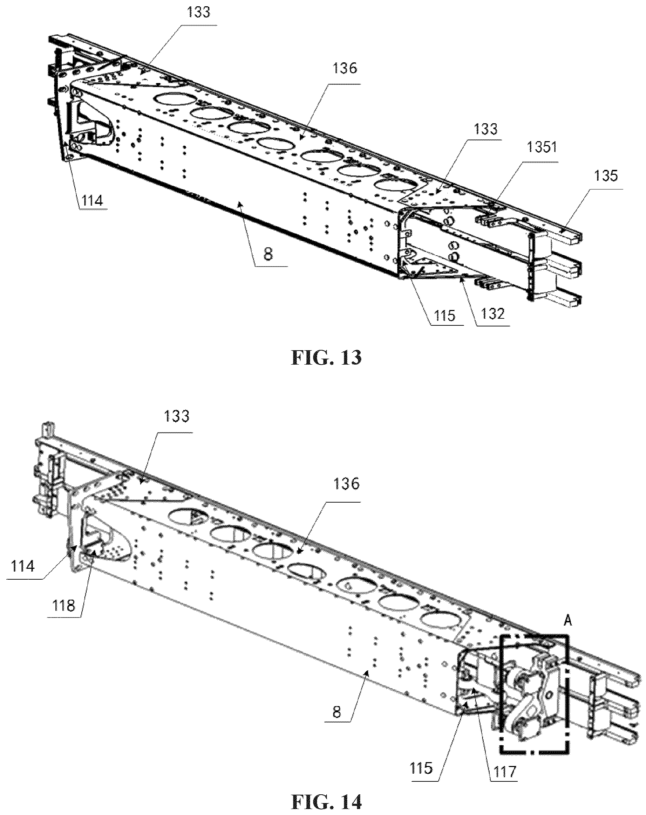

Referring to FIG. 12 and FIG. 13, FIG. 12 is a structural view of the guide electromagnet in FIG. 5, and FIG. 13 is another view of FIG. 12.

Each guide electromagnet 8 includes an upper back box 136 and a lower back box 132 which are arranged opposite to each other, and reinforcing plates 133 are provided at two ends of each of the upper back box 136 and the lower back box 132 respectively, which effectively improves the strength and rigidity of the guide electromagnet 8 under the alternating load of the longitudinal force and the guide force. The guide electromagnet 8 is provided with four reinforcing plates 133, and two of the reinforcing plates 133 are riveted to both ends of the upper back box 136 and both ends of the lower back box 132 respectively.

Each guide electromagnet 8 further includes multiple groups of magnetic poles 134 and multiple magnetic yokes 135, and the magnetic yokes 135 are provided on two opposite sides of each group of magnetic poles 134 respectively, and each group of magnetic poles 134 are distributed linearly. Specifically, the number of the magnetic poles 134 can be reasonably set based on the requirements of the maglev train for the guidance force. The magnetic pole 134 is bolted to the magnetic yoke 135, which facilitates disassembly and assembly of the magnetic pole 134, and facilitates flexible adjustment of the position of the magnetic pole 134.

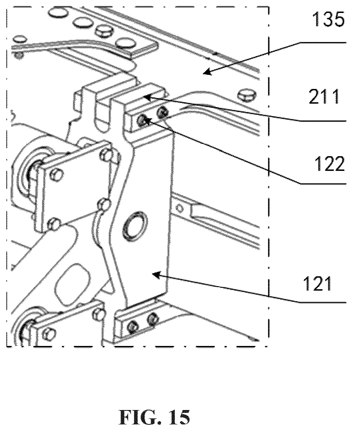

Referring to FIG. 14 and FIG. 15, FIG. 14 is a structural view of the guide electromagnet connected to a transverse pull rod in FIG. 5, and FIG. 15 is a partial enlarged view of part A in FIG. 14.

A clamping groove 1351 is integrally formed at one end of the magnetic yoke 135 close to the elastic-end connection seat 115, and the transverse pull rod 121 is provided with a clamping block 211. The clamping groove 1351 is in concave-convex fit with the clamping block 211, and a positioning pin 122 is inserted between the clamping groove 1351 and the clamping block 211, so that the position of the guide electromagnet 8 relative to the second support arm 112 is limited in the transverse direction, and it is convenient to assemble and disassemble the guide electromagnet 8. The positioning pin 122 may be specifically an elastic cylindrical pin, but is not limited thereto. Specifically, each of the magnetic yokes 135 on an upper side and a lower side of the guide electromagnet 8 is provided with a clamping groove 1351, which can be connected to an upper end and a lower end of the transverse pull rod 121.

The present application further discloses a maglev train, which includes the above suspension frame and has the same beneficial effects.

The maglev train and the suspension frame thereof provided in the present application are described in detail above, and specific embodiments are used herein to describe the principle and implementation of the present application. The description of the above embodiments is only used to help understand the method and the core concept of the present application. Meanwhile, those skilled in the art may make changes in the specific implementation and the application range based on the concept of the present application, there, and in summary, the content of the present specification should not be construed as limiting the present application.

## Claims

1. A suspension frame, comprising a two-stage suspension device, a cross-beam frame assembly and an electromagnet module; wherein the cross-beam frame assembly comprises two cross-beam frames which are provided in a transverse direction for a transverse bearing; guide electromagnet box bodies on two sides of the electromagnet module are positioned at two ends of the two cross-beam frames respectively, and each of the guide electromagnet box bodies is fixed to the two cross-beam frames on corresponding sides for a longitudinal bearing; the two-stage suspension device is provided on the two cross-beam frames for being connected to a vehicle body.

2. The suspension frame according to claim 1, wherein the two-stage suspension device comprises an air spring and an additional air chamber which are provided at a top of either end of each cross-beam frame; the additional air chamber is provided between a bottom of the corresponding air spring and the top of the cross-beam frame so as to provide a gas medium to the air spring.

3. The suspension frame according to claim 2, wherein a body of the cross-beam frame is provided with an air spring mounting bracket, and the air spring and the additional air chamber are sequentially fixed on the corresponding air spring mounting bracket.

4. The suspension frame according to claim 2 or 3, wherein the body of one of the two cross-beam frames is provided with two transverse auxiliary springs, and the body of the other cross-beam frame is provided with two transverse blockers; an extension end of each of the two transverse auxiliary springs is provided opposite to the corresponding additional air chamber and elastically abuts against the corresponding additional air chamber; an extension end of each of the two transverse blockers is provided opposite to the corresponding additional air chamber and spaced apart from the corresponding additional air chamber by a first predetermined gap.

5. The suspension frame according to claim 4, wherein the body of one of the two cross-beam frames is provided with two transverse auxiliary spring brackets, and the body of the other cross-beam frame is provided with two transverse blocker brackets; each of the two transverse auxiliary springs is fixedly provided on one side of the corresponding transverse auxiliary spring bracket, and each of the two transverse blockers is fixedly provided on one side of the corresponding transverse blocker bracket; and a wear plate is respectively provided on each of opposite side surfaces of the additional air chambers that are matched with the transverse auxiliary springs and the transverse blockers.

6. The suspension frame according to claim 5, wherein one of the two cross-beam frames is provided with an anti-side-rolling torsion bar, which is provided on the other side of the transverse auxiliary spring bracket; a bottom rod of the anti-side-rolling torsion bar is arranged in a longitudinal direction and extended to form a limiting end.

7. The suspension frame according to claim 6, wherein a vertical limiting spring is further provided on the cross-beam frame where the anti-side-rolling torsion bar is located, and the vertical limiting spring is provided on the other side of the transverse auxiliary spring bracket; the vertical limiting spring is located above the limiting end of the anti-side-rolling torsion bar and spaced apart from the limiting end by a second predetermined gap.

8. The suspension frame according to claim 7, wherein a hinge seat is provided at a bottom of the body of the cross-beam frame, the bottom rod of the anti-side-rolling torsion bar is hinged to the hinge seat, and the vertical limiting spring is fixed on the corresponding transverse auxiliary spring bracket.

9. The suspension frame according to claim 4, wherein the suspension frame comprises two groups of height adjustment valves, and the two groups of height adjustment valves are arranged on the cross-beam frame and spaced apart in the transverse direction.

10. The suspension frame according to claim 9, wherein the suspension frame further comprises a traction device, a support skid and a rescue wheel device; wherein the traction device is provided on the cross-beam frame, the support skid and the rescue wheel device are provided at the bottom of the cross-beam frame, and the rescue wheel device is located on an inner side of the support skid.

11. The suspension frame according to claim 1, wherein the suspension frame comprises a first support arm, a second support arm and two guide electromagnets which are provided in parallel between the first support arm and the second support arm; two ends of each guide electromagnet are respectively mounted with a fixed-end connection seat and an elastic-end connection seat, wherein the fixed-end connection seat is connected to the first support arm by means of a connection bolt, and the elastic-end connection seat is connected to the second support arm by means of an elastic pull rod.

12. The suspension frame according to claim 11, wherein a shear-resistant assembly is provided between the fixed-end connection seat and the first support arm for preventing the connection bolt from being sheared.

13. The suspension frame according to claim 12, wherein the shear-resistant assembly comprises:
an inner baffle, which is fixedly connected to the first support arm;
an outer baffle, which is fixedly connected to the fixed-end connection seat;
a positioning block, which is embedded in a positioning groove formed in the fixed-end connection seat;
an elastic pad, which is directly sandwiched between the positioning block and the outer baffle;
a limiting pin, which is inserted between the inner baffle and the positioning block in the longitudinal direction for limiting the fixed-end connection seat to move relative to the first support arm in the transverse direction or a vertical direction.

14. The suspension frame according to claim 13, wherein the shear-resistant assembly further comprises:
an adjustment cushion block, which is provided between the positioning block and the positioning groove for adjusting the position of the positioning block relative to the positioning groove;
two clamping cushion blocks, which are respectively provided on two opposite sides of the adjustment cushion block for clamping the adjustment cushion block in the transverse direction.

15. The suspension frame according to claim 14, wherein the adjustment cushion block comprises:
two vertical-adjustment cushion blocks, which are respectively provided on an upper side and a lower side of the positioning block for adjusting the position of the positioning block in the vertical direction;
two transverse-adjustment cushion blocks, which are respectively provided on a left side and a right side of the positioning block for adjusting the position of the positioning block in the transverse direction.

16. The suspension frame according to any one of claims 11 to 15, wherein the elastic pull rod is provided with two node seats, the elastic-end connection seat and the second support arm are respectively connected to the two node seats by means of fixing bolts, and a shear-resistant sleeve is mounted outside the fixing bolt and abuts against the elastic-end connection seat or the second support arm.

17. The suspension frame according to any one of claims 11 to 15, wherein each of the guide electromagnets comprises an upper back box and a lower back box which are provided opposite to each other, and reinforcing plates are provided at two ends of each of the upper back box and the lower back box respectively.

18. The suspension frame according to any one of claims 11 to 15, wherein each of the guide electromagnets further comprises a plurality of groups of magnetic poles and magnetic yokes arranged on two opposite sides of each group of magnetic poles, wherein each group of magnetic poles are distributed linearly, and the plurality of groups of magnetic poles are bolted to the magnetic yokes.

19. The suspension frame according to claim 18, wherein a clamping groove is integrally formed at one end of the magnetic yoke close to the elastic-end connection seat, the clamping groove is matched with a clamping block provided on the transverse pull rod, and a positioning pin is inserted between the clamping groove and the clamping block.

20. A narrow vehicle body high-speed maglev train, comprising the suspension frame according to any one of claims 1 to 19.
